# EUROPEAN PATENT APPLICATION

(11) **EP 2 618 300 A2**
(43) Date of publication of application: **24.07.2013**
(21) Application number: 11825358.2
(22) Date of filing: 02.09.2011
(51) Int. Cl.: G06Q 50/00, G06F 3/12

(54) **DIGITAL CONTENT CREATION AND RESTORATION METHOD, AND COMPUTER-READABLE RECORDING MEDIUM FOR RECORDING PROGRAM FOR SAME**

(30) Priority: 05.11.2010 KR 20100109595; 16.09.2010 KR 20100090944
(71) Applicant: Lim, Chang-Soo, Seoul 150-103 (KR)
(72) Inventor: Lim, Chang-Soo, Seoul 150-103 (KR)
(74) Representative: Stolmár & Partner
(86) International application number: PCT/KR2011/006520
(87) International publication number: WO 2012/036398

(57) **Abstract**

The present invention relates to a digital contents generation and restoration technology. More particularly, the present invention relates to a method for generating and restoring digital contents, which prints numerical values constituting a digital contents file or a data image composed of various colors of dots mapped with data values of a digital contents file on a printable medium and restores the original contents file using the image including the numerical values printed on the printable medium or the various colors of dots. According to the embodiments of the present invention, a digital device such as a camera or scanner is used to restore a digital contents files from a series of numerical values printed on a paper or a data image composed of various colors of dots mapped with data values of a digital contents file. Accordingly, the digital contents file may be transferred to an external representation device through a simple printed matter and then reproduced, without using a high-capacity data storage medium and a complex representation device.

## Description

### TECHNICAL FIELD

The present invention relates to a method for generating and restoring digital contents, and more particularly, to a method for generating and restoring digital contents, which prints numerical values constituting a digital contents file or a data image composed of various colors of dots mapped with data values of a digital contents file on a printable medium and restores the original contents file using the image including the numerical values printed on the printable medium or the various colors of dots.

### BACKGROUND

According to conventional contents transfer technology, digital contents files have been transferred under such an environment that the digital contents files are stored in a portable storage medium such as CD, memory card, and memory stick and the portable storage media are recognized by a computer to access the digital contents files stored in the portable storage media.

In the conventional contents transfer technology, the portable storage medium stores a plurality of digital contents files depending on its storage capacity for digital data. The portable storage medium stores a digital contents file in which binary values represented by 0 and 1 are listed. A digital device such as a computer accesses a digital contents file according to a transfer standard of digital data depending on the type of the portable storage medium.

Since the digital contents transfer technology using a potable storage medium requires a digital input/output device to recognize the portable storage medium, the portable storage medium and the digital input/output device must be provided to transfer digital contents files. When the digital device does not include the digital input/output device capable of recognizing the portable storage medium, the digital contents files cannot be transferred. Therefore, there is a demand for new technology for transferring digital contents files, which is different from the digital contents transfer technology using a portable storage medium.

### DISCLOSURE

### TECHNICAL PROBLEM

An embodiment of the present invention is directed to a digital contents generation and restoration technology which prints numerical values constituting a digital contents file and a data image composed of various colors of dots mapped with data values of a digital contents file on a printing medium (for example, paper, plastic card, and business card), and restores the original contents file using the image including the numerical values printed on the printable medium or the various colors of dots.

### TECHNICAL SOLUTION

In accordance with an embodiment of the present invention, a method for generating digital contents includes: (a) analyzing numerical values constituting a digital contents file in which the numerical values are coded by a predetermined numeral system; and (b) printing the analyzed numerical values on a printing medium.

In accordance with another embodiment of the present invention, a method for generating digital contents includes: (a) generating an image for a printing medium on which numerical values constituting a digital contents file are printed in which the numerical values are coded by a predetermined numeral system; (b) detecting the numerical values from the generated image; and (c) generating a digital contents file using the detected numerical values.

In accordance with another embodiment of the present invention, a method for generating digital contents includes: (a) analyzing data values for a digital contents file in which the numerical values are coded by a predetermined numeral system; and (b) printing an image composed of various colors of data dot pixels mapped with the analyzed data values.

In accordance with another embodiment of the present invention, a method for restoring digital contents includes: (a) generating an image for a printing medium on which an image composed of various colors of data dot pixels mapped with data values for a digital contents file are printed in which the numerical values are coded by a predetermined numeral system; (b) detecting the data values mapped with the respective dot pixels constituting the corrected image; and (c) generating the digital contents file using the detected data values.

### ADVANTAGEOUS EFFECTS

According to the embodiments of the present invention, a relatively simple and widely spread digital device such as a camera or scanner is used to restore a digital contents files from a series of numerical values printed on a paper or a data image composed of various colors of dots mapped with data values of a digital contents file. Accordingly, the digital contents file may be transferred to an external representation device through a simple printed matter and then reproduced, without using a high-capacity data storage medium and a complex representation device.

### BRIEF DESCRIPTION OF THE DRAWINGS

FIG. 1 is configuration diagram illustrating a digital contents generation and restoration system according to a first embodiment of the present invention.
FIG. 2 is a flowchart for explaining a method for generating and restoring digital contents according to the first embodiment of the present invention.
FIGS. 3A and 3B are conceptual diagrams of data images composed of various colors of dots according to a second embodiment of the present invention.
FIG. 4 is a block diagram illustrating the configuration of a digital contents generation and restoration system according to the second embodiment of the present invention.
FIG. 5 is a flowchart for explaining a method for generating and restoring digital contents according to the second embodiment of the present invention.

### BEST MODE FOR THE INVENTION

Exemplary embodiments of the present invention will be described below in more detail with reference to the accompanying drawings. The present invention may, however, be embodied in different forms and should not be constructed as limited to the embodiments set forth herein. Rather, these embodiments are provided so that this disclosure will be thorough and complete, and will fully convey the scope of the present invention to those skilled in the art. Throughout the disclosure, like reference numerals refer to like parts throughout the various figures and embodiments of the present invention.

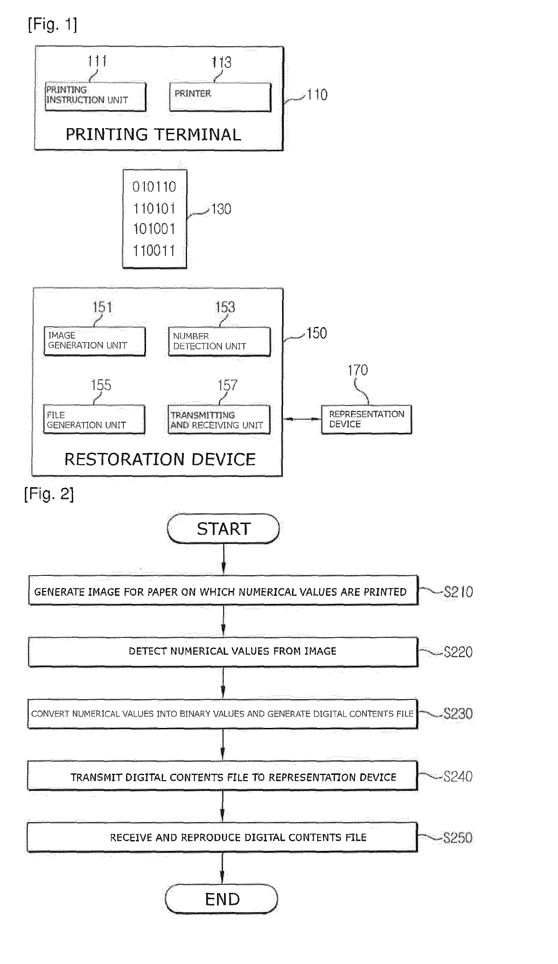

FIG. 1 is configuration diagram illustrating a digital contents generation and restoration system according to a first embodiment of the present invention.

The digital contents generation and restoration system according to the first embodiment of the present invention includes a printing terminal 110 and a restoration device 150. The printing terminal 110 is configured to print numerical values constituting a digital contents file on a piece of paper 130. The restoration device 150 is configured to generate an image for the paper 130 on which the series of numerical values are printed, detect the numerical values from the generated image, and restore the digital contents file. The configurations of the printing terminal 110 and the restoration device 150 to perform such operations will be described as follows.

The digital contents file may include one of various contents files such as music file, moving image file, voice recorded file, character information file, address book file and the like.

The printing terminal 110 prints numerical values on the paper 130, and the restoration device 150 generates an image for the paper 130 on which the series of numerical values are printed, and detects the numerical values from the image so as to generate a digital contents file. Here, the numerical values are expressed according to a numeral system agreed between the printing terminal 110 and the restoration device 150. Therefore, the numerical values may be expressed according to a binary system, an octal notation, or a decimal system.

The printing terminal 110 includes a printing instruction unit 111 and a printer 113. The printing instruction unit 111 is configured to analyze the numerical values constituting the digital contents file and issue an instruction to print the analyzed numerical values. The printer 113 is configured to print the numerical values on the paper 130 according to the instruction of the printing instruction unit 111.

The printing instruction unit 111 provides a list of a plurality of digital contents files to a user, reads a digital contents file selected by the user, and instructs the printer 113 to print the numerical values constituting the digital contents file. The printing instruction unit 111 instructs the printer 113 to print the series of binary numerical values constituting the digital contents file.

The printer 113 prints the binary numerical values on the paper 130 according to the instruction of the printing instruction unit 111. The paper 130 used in the printer 113 may have an exterior similar to that of a general paper. The paper 130 does not need to have a large difference from a general paper in terms of the material of the paper. Furthermore, the paper 130 used in the printer 113 is not necessarily formed of paper pulp, but may be formed of a plastic material. The paper 130 may include a card, a business card, a music album, a book, a pamphlet, a product surface, a CD surface and the like.

The restoration device 150 includes an image generation unit 151, a number detection unit 153, a file generation unit 155, and a transmitting and receiving unit 157. The image generation unit 151 is configured to generate an image for the paper on which the series of numerical values are printed. The number detection unit 153 is configured to detect the series of numerical values from the generated image. The file generation unit 155 is configured to generate a digital contents file including the detected numerical values. The transmitting and receiving unit 157 is configured to transmit the generated digital contents file to a representation device 170. In this embodiment of the present invention, it has been described that the restoration device 150 transmits the digital contents file to the representation device 170, but the present invention is not limited thereto. The restoration device 150 may include an interface into which a portable storage medium such as a small memory card or USB memory card may be inserted. In this case, the representation device 170 to support the portable storage medium may receive the restored digital contents file through the portable storage medium.

When the restoration device 150 includes a camera, the image generation unit 151 uses the camera to generate an image for the paper 130 on which the series of numerical values are printed. The image generation unit 151 drives the camera to take an image for the paper 130 on which the series of numerical values are printed, thereby generating the image. In another embodiment, when the restoration device 150 includes a scanner, the image generation unit 151 uses the scanner to generate an image for the paper 130 on which the series of numerical values are printed. The image generation unit 151 drives the scanner to scan the paper 130 on which the series of numerical values are printed, thereby generating the image.

The number detection unit 153 detects the series of numerical values from the image generated by the image generation unit 151. The number detection unit 153 detects the series of numerical values, expressed according to the system agreed between the printing terminal 110 and the restoration device 150, from the image. The number detection unit 153 transfers the detected numerical values to the file generation unit 155.

The file generation unit 155 generates a digital contents file including the numerical values detected by the number detection unit 153. The file generation unit 155 converts the numerical values into binary numerical values by referring to the numerical values expressed according to the system agreed between the printing terminal 110 and the restoration device 150, and generates a digital contents file composed of binary numerical values.

The transmitting and receiving unit 157 transmits and receives data to and from the representation device 170 which is an external device. The transmitting and receiving unit 157 according to the first embodiment of the present invention transmits the generated digital contents file to the representation device 170.

The representation device 170 reproduces the digital contents file generated by the restoration device 150.

As an example of the digital contents generation and restoration system, an example in which an address book is transmitted from a computer to a mobile terminal will be described as follows. The computer reads binary values constituting data of the address book and displays the read binary values on a monitor, and the mobile terminal takes an image for the binary values displayed on the monitor so as to acquire image data, detects the binary values included in the image data so as to acquire original address book data, and stores the address book data in the address book. In addition to the address book, various types of digital contents files may be transferred from the computer to the mobile terminal.

FIG. 2 is a flowchart for explaining a method for generating and restoring digital contents according to the first embodiment of the present invention.

The method for generating and restoring digital contents according to the first embodiment of the present invention includes an operation in which the restoration device 150 generates an image for the paper 130 on which a series of numerical values are printed, detects the series of numerical values from the image, and restores a digital contents file.

The restoration device 150 generates an image for the paper 130 on which the series of numerical values are printed, at step S210. For example, the restoration device 150 may use a camera to take an image for the paper 130 on which the series of numerical values are printed, thereby generating the image. In another embodiment, the restoration device 150 may use a scanner to scan the paper on which the series of numerical values are printed, thereby generating an image.

The restoration device 150 detects the series of numerical values from the generated image in which the numerical values are coded by a predetermined numerical, at step S220. The restoration device 150 performs image processing for number detection on the generated image, and detects the series of numerical values included in the image.

The restoration device 150 converts the detected numerical values into binary numerical values, and generates a digital contents file including the binary numerical values, at step S230. The restoration device 150 converts the numerical values into the binary numerical values by referring to the numerical values expressed according to the predetermined numeral system, and generates the digital contents file composed of the binary values.

Then, the restoration device 150 transmits the digital contents file to the representation device 170 through the transmitting and receiving unit 157 at step S240, and the representation device 170 performs a decoding process corresponding to the contents property of the digital contents file and reproduces the digital contents file at step S250.

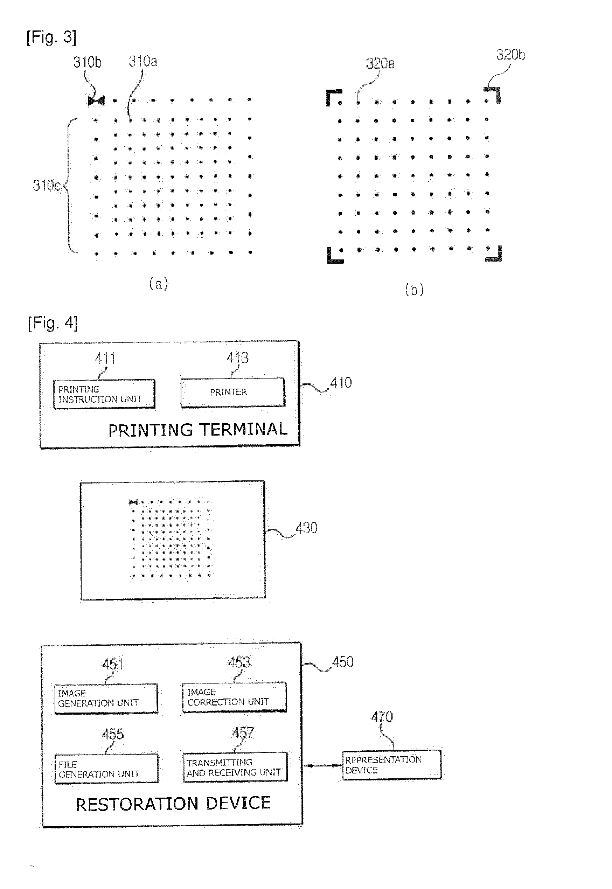

FIGS. 3A and 3B are conceptual diagrams of data images composed of various colors of dots according to a second embodiment of the present invention.

FIGS. 3A and 3B illustrate data images composed of a plurality of dot pixels obtained by representing digital contents data using various colors, and the respective dot pixels are matched with data values constituting the digital contents data according to a predefined method. Here, the dot pixels may be represented in various manners such as Gray Scale, RGB, and CMYK.

Referring to FIG. 3A, an information image 310b indicating data amount, dot pixel unit, an effective region of dot pixels, resolution information, and a reference point of the dot pixels may be displayed outside a plurality of data dot pixels 310a obtained by representing digital contents data in various colors. Furthermore, a reference dot sequence 310a composed of a plurality of dot pixels may be displayed around the plurality of data dot pixels 310a. The reference dot sequence 310a sequentially displays all colors which may be expressed by the method for representing dot pixels, and serves as a reference for correcting discoloration of the printed data dot pixels on a printing medium and color distortion of the data dot pixels which occurs while the printed data dot pixels are scanned. For example, when the color of a specific data dot pixel is distorted, the data dot pixel is compared to a dot pixel existing in the reference dot sequence 310a and having the same color as the data dot pixel, in order to determine the distortion of the specific data dot pixel. The distortion is reflected to correct a data image composed of data dot pixels.

Referring to FIG. 3B, L-shaped separator images 320b are displayed at the respective corners of an effective region of a plurality of data dot pixels 320a obtained by representing digital contents data in various colors. The effective region of the data dot pixels 320a may be indicated by the separator images 320b.

FIG. 4 is a block diagram illustrating the configuration of a digital contents generation and restoration system according to the second embodiment of the present invention.

Referring to FIG. 4, the digital contents generation and restoration system according to the second embodiment of the present invention includes a printing terminal 410 and a restoration device 450. The printing terminal 410 is configured to analyze data of a digital contents file and print a data image, including various colors of dot pixels mapped with the analyzed data, on a piece of paper 430. The restoration device 450 generates an image for the paper 430 on which the data image is printed, and restores the digital contents file from the generated image. The configurations of the printing terminal 410 and the restoration device 450 to perform such operations will be described as follows.

The printing terminal 410 prints a data image on the paper 430, and the restoration device 450 generates an image for the paper 430 on which the data image is printed, detects data dot pixels 310a from the generated image, and correct the detected data dot pixels 310a to restore the digital contents file.

The printing terminal 410 includes a printing instruction unit 411 and a printer 413. The printing instruction unit 411 is configured to instruct the printer 413 to print data dot pixels matched with data constituting a digital contents file. The printer 413 is configured to print the data dot pixels on the paper 430 according to the instruction of the printing instruction unit 411. Here, the printing instruction unit 411 may issue an instruction to print the information image 310b and the reference dot sequence 310c around the data dot pixels.

The printing instruction unit 411 provides a list of a plurality of digital contents files to a user, reads a digital contents file selected by the user, and instructs the printer 413 to print a data image for the digital contents file.

The printer 413 prints the data image on the paper 430 according to the instruction of the printing instruction unit 411.

The restoration device 450 includes an image generation unit 451, an image correction unit 453, a file generation unit 455, and a transmitting and receiving unit 457. The image generation unit 451 is configured to generate an image for the paper 430 on which the data image is printed. The image correction unit 453 is configured to correct distortion which may occur while the image is scanned. The file generation unit 455 is configured to restore the digital contents file from the plurality of data dot pixels constituting a data image displayed on the corrected image. The transmitting and receiving unit 457 is configured to transmit the restored digital contents file to the representation device 470.

When the restoration device 450 includes a camera or scanner, the image generation unit 451 uses the camera or scanner to generate an image for the paper 430 on which the data image is printed.

The image correction unit 453 is configured to correct distortion which may occur when the data image printed on the paper is discolored by an external environment or which may occur in a camera lens or image processing while the image is read through a camera or scanner. The image correction unit 453 determines and corrects distortion of the data dot pixels constituting the data image, using the reference dot sequence 310c included in the data image. At this time, the image correction unit 453 may reflect the distortion of the data dot pixels to generate a corrected image or provide the distortion information to the file generation unit 455. The image correction unit 453 may correct a resolution difference between an actual image printed on the paper 430 and an image generated by the image generation unit 451 as well as the color distortion. For example, when a resolution difference occurs between the actual image printed on the paper 430 and the image generated by the image generation unit 451, the image correction unit 453 applies the resolution information included in the information image 310b to correct the resolution of the image generated by the image generation unit 451.

The file generation unit 455 is configured to detect the data dot pixels from the image generated by the image generation unit 451 or the image corrected by the image correction unit 453 and restore the digital contents data using the data information matched with the detected data dot pixels. Furthermore, when the distortion information is received from the image correction unit 453, the file generation unit 455 may restore the digital content data by reflecting the distortion information into the image generated by the image generation unit 451.

The transmitting and receiving unit 457 is configured to transmit and receive data to and from the representation device 470 which is an external device. The transmitting and receiving unit 467 according to the second embodiment of the present invention transmits the generated digital contents file to the representation device 470.

The representation device 470 is configured to reproduce the digital contents file generated by the file generation unit 455.

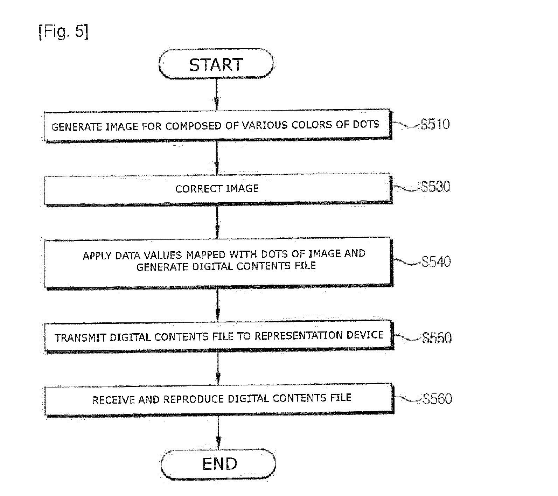

FIG. 5 is a flowchart for explaining a method for generating and restoring digital contents according to the second embodiment of the present invention.

The method for generating and restoring digital contents according to the second embodiment of the present invention includes an operation in which the restoration device 450 generates an image for the paper 430 on which a data image is printed and detects a data dot image from the generated image so as to restore and reproduce a digital contents file.

The restoration device 450 generates an image for a paper on which a data image composed of various colors of dots is printed at step S510.

Then, the restoration device 450 calculates and corrects distortion of the generated image, using the reference dot sequence 310c constituting the data image included in the generated image, at step S530.

Then, the restoration device 450 applies previously mapped data to the respective dots constituting the corrected image, and generates a digital contents file, at step S540.

Then, the restoration device 450 transmits the digital contents file to the representation device 470 through the transmitting and receiving unit 457 at step S550, and the representation device 470 performs a decoding process corresponding to the contents property of the digital contents file and restores the received digital contents file at step S560.

While the present invention has been described with respect to the specific embodiments, it will be apparent to those skilled in the art that various changes and modifications may be made without departing from the spirit and scope of the invention as defined in the following claims.

## Claims

1. A method for generating digital contents, comprising:
(a) analyzing numerical values constituting a digital contents file, in which the numerical values are coded by a predetermined numeral system; and
(b) printing the analyzed numerical values on a printing medium.

2. A method for generating digital contents, comprising:
(a) generating an image for a printing medium on which numerical values constituting a digital contents file are printed in which the numerical values are coded by a predetermined numeral system;
(b) detecting the numerical values from the generated image; and
(c) generating a digital contents file using the detected numerical values.

3. A method for generating digital contents, comprising:
(a) analyzing data values for a digital contents file in which the data values are coded by a predetermined numeral system; and
(b) printing an image composed of various colors of data dot pixels in which the colors of the data dot pixels are mapped with the analyzed data values.

4. The method according to claim 3, wherein in the step (b),
the image further comprises an information image outside the data dot pixels, wherein the information image indicates one or more of data amount, dot pixel unit, an effective region of dot pixels, resolution information, and a reference point of the dot pixels.

5. The method according to claim 4, wherein in the step (b),
the image further comprises a reference dot sequence displayed outside the data dot pixels so as to serve as a reference for correcting discoloration of the data dot pixels on a printing medium and color distortion of the data dot pixels which occurs while the printed data dot pixels are scanned, wherein the reference dot sequence is formed by sequentially representing all colors which are expressed by the data dot pixels.

6. The method according to claim 5, wherein in the step (b),
the image is represented by one of Gray Color, RGB, and GMYK.

7. The method according to any one of claims 1 to 6, wherein in step (a),
the digital contents file is one of various contents files including a music file, a moving image file, a voice recorded file, a character information file, and an address book file.

8. A method for restoring digital contents, comprising:
(a) generating an image for a printing medium on which an image is printed with including various colors of data dot pixels which are mapped with data values for a digital contents file in which the data values are coded by a predetermined numeral system;
(b) detecting data values mapped with the respective dot pixels constituting the corrected image; and
(c) generating a digital contents file using the detected data values.

9. The method according to claim 8, wherein in the step (a),
the image further comprises an information image outside the data dot pixels, wherein the information image indicates one or more of data amount, dot pixel unit, an effective region of dot pixels, resolution information, and a reference point of the dot pixels.

10. The method according to claim 9, wherein in step (a),
the image further comprises a reference dot sequence displayed outside the data dot pixels so as to serve as a reference for correcting discoloration of the data dot pixels on a printing medium and color distortion of the data dot pixels which occurs while the printed data dot pixels are scanned, wherein the reference dot sequence is formed by sequentially representing all colors which are expressed by the data dot pixels, and
the method further comprises correcting the generated image using the information image or the reference sequence, between the steps (a) and (b).

11. A computer-readable recording medium comprising a digital contents generation program to execute the method according to any one of claims 1 to 6.

12. A computer-readable recording medium comprising a digital contents restoration program to execute the method according to any one of claims 8 to 10.
